Europäisches Patentamt

European Patent Office

Office européen des brevets

(19)

(11) Veröffentlichungsnummer: **0 191 124 B1**

(12) **EUROPÄISCHE PATENTSCHRIFT**

(45) Veröffentlichungstag der Patentschrift: **16.01.91**

(51) Int. Cl.⁵: **B 60 C 9/18**

(21) Anmeldenummer: **85101604.8**

(22) Anmeldetag: **14.02.85**

(54) Gürtelreifen und Verfahren zum Herstellen desselben.

(43) Veröffentlichungstag der Anmeldung:
20.08.86 Patentblatt 86/34

(45) Bekanntmachung des Hinweises auf die
Patenterteilung:
16.01.91 Patentblatt 91/03

(84) Benannte Vertragsstaaten:
AT BE CH FR GB IT LI NL SE

(56) Entgegenhaltungen:
EP-A-0 101 400
EP-A-0 114 460
EP-A-0 115 129
DE-A-3 401 016
US-A-3 057 392

(73) Patentinhaber: **Janus, Jonny**
**Kreuzstrasse 53**
**D-4000 Düsseldorf 1 (DE)**

(72) Erfinder: **Janus, Jonny**
**Kreuzstrasse 53**
**D-4000 Düsseldorf 1 (DE)**

(74) Vertreter: **Türk, Gille, Hrabal**
**Brucknerstrasse 20**
**D-4000 Düsseldorf 13 (DE)**

Courier Press, Leamington Spa, England.

## Beschreibung

Die Erfindung betrifft einen Gürtelreifen mit den Merkmalen des Oberbegriffes des Patentanspruches 1.

Bei der herkömmlichen Konstruktion von Gürtelreifen besteht die Gürtellage aus einem in mehreren Lagen übereinander angeordneten Cordgewebematerial, vorzugsweise aus dünnem Stahlfaden, wobei, bedingt durch den Gewebecharakter, ein relativ hoher Anteil des eingesetzten Materials auf querverlaufende Fäden entfällt. Das in mehreren Lagen übereinander angeordnete Cordgewebe wird schließlich mit Kautschuk bzw. Gummimaterial ummantelt, so daß sich insgesamt eine unverhältnismäßig große Querschnittsdicke der mehrschichtigen Gürtellage ergibt, von der der größte Teil auf das statisch-dynamisch nicht wirksame Kautschuk- bzw. Gummimaterial entfällt. Immerhin entsteht durch die formschlüssige und weitgehend auch kraftschlüssige Einbettung der einzelnen Cordfäden insgesamt eine Gürtelkonstruktion, die während der für Reifen typischen Betriebsbedingungen im Verhältnis zu den Eigenschaften des einzelnen hochflexiblen Stahlfadens ein unverhältnismäßig hohes Trägheitsmoment entwickelt.

Bei einem weiteren bekannten Gürtelreifen (DE—OS 23 55 489) bestehen die im Laufflächenbereich eingebetteten, als Gürtellage dienenden Versteifungseinlagen aus einem Band aus einem hochfesten homogenen Werkstoff, das zu einem endlosen Ring mit geschlossenen Seitenkanten ausgebildet ist, der über seinen gesamten Umfang mit gegeneinander abgeschlossenen Durchbrechungen versehen ist. Die Durchbrechungen sind in mehreren über die axiale Breite des Bandes aufeinanderfolgenden Reihen nebeneinander angeordnet.

Hierdurch soll eine einfach herzustellende gürtelartige Versteifungseinlage mit vergleichsweise geringem Materialaufwand und ohne wesentliche Gewichtszunahme bei Erhaltung der durchgehenden haftenden Bindung zwischen dem Karkassenteil und den auf die Gürtellage aufgebrachten Laufflächenteilen des Reifens erreicht werden.

Ein Gürtelreifen mit einer derartigen Versteifungseinlage kann sich jedoch den Fahrbahnunebenheiten, insbesondere beim Überfahren von Querwellen, in seiner Querrichtung nicht ausreichend anpassen. Er ist außerdem mindestens um den Anteil der statisch-dynamisch nicht benötigten Verbindungsrippen unnötig schwerer. Ein weiterer wesentlicher Nachteil besteht darin, daß die Gürtellage in dieser Form völlig starr und daher nicht imstande ist, die in begrenztem Umfang notwendigen Dehn-bzw. Stauchbewegungen in Umfangsrichtung auszuführen.

Es ist zwar weiterhin ein Gürtelreifen für Fahrzeuge bekannt (DE—OS 27 22 923), bei dem der Gürtel zur Laufflächenstabilisierung mehrere getrennte koaxiale Bänder aufweist, die axial voneinander durch Bereiche getrennt sind, die bei seitlichen Kräften auf die Lauffläche eine lokale Laufflächendeformation zulassen. Hierdurch soll ein Reifen geschaffen werden, der insbesondere bei Querkräften einen besseren Bodenkontakt der Lauffläche besitzt.

Bei diesem bekannten Reifen besteht jedes der koaxial nebeneinander angeordneten Bänder oder Ringe aus feinen Stahlcordfäden, so daß flexible, aber in Umfangsrichtung des Reifens im wesentlichen undehnbare Bänder gebildet werden, die nach dem dem Cordfaden typischen Strecken eine radiale Größenzunahme des belasteten Reifens begrenzen. Von drei nebeneinander angeordneten Bändern weisen die beiden äußeren Bänder jeweils ein in der Nähe der jeweiligen Reifenschulter um 180° gefaltetes Band auf, während das mittlere Band aus zwei parallelen, übereinander liegenden Drahtlagen besteht und keine Faltung besitzt.

Wenn auch durch eine derartige Ausgestaltung der Versteifungseinlagen des Reifens bereits eine Anpassung der einzelnen Ringe der Gürtellage beim Überfahren von Fahrbahnunebenheiten erreicht wird, so haben diese bekannten Gürtellagen bzw. Bänder aus feinen Stahlcordfäden doch eine verhältnismäßig große Gesamtquerschnittsdicke, wodurch sich ein hohes Trägheitsmoment ergibt und die Abrolleigenschaften und insbesondere der Rollwiderstand des Reifens nachteilig beeinflußt werden. Außerdem haben die notwendigen Querfäden nur konstruktive, aber keine tragende, die Leistung beeinflussende Funktion. Sie verursachen Kosten und Gewicht, sind also von Nachteil. Im übrigen ist diese Ausführungsform nicht für die Verwendung bei Gießreifen geeignet.

Bei einem bekannten Gürtelreifen (EP—A—O 101 400) ist die Gürteleinlage in Form einer Verstärkungseinrichtung ausgebildet, welche im Kronenbereich des Reifens angeordnet ist und auch bei niedrigem Reifendruck oder bei Druckverlust ein hohes Maß an Flexibilität gewährleistet. Die Gürteleinlage bildet eine halbfeste reifenartige Struktur aus. Die einzelnen, die Gürteleinlage bildenden Gürtelelemente sind nicht dehnbar ausgebildet und umfassen beispielsweise ein faserverstärktes Epoxy-Material. Weder die Gürteleinlage selbst, noch die einzelnen ringförmigen Gürtelelemente sind dehnbar ausgebildet, vielmehr erfolgt bei einer Abplattung des Reifens an seiner Aufstandsfläche durch die nicht dehnbare Ausgestaltung eine entsprechende Formänderung eines anderen, nicht belasteten Reifenbereichs.

Aus der EP—A—O 115 129 ist ein Reifen bekannt, der in seinem Umfangsbereich mit einer Gürteleinlage versehen ist, welche in Umfangsrichtung eine wesentlich größere Steifigkeit aufweist, als in seitlicher Richtung. Auch hier kommt es im Bereich der Aufstandsfläche bzw. dadurch im nicht belasteten Reifenbereich zu Formveränderungen und Stauchungen der Gürteleinlage.

Gleiches gilt für einen aus der US—A—30 57 392 bekannten Reifen.

Bei allen bekannten Gürtelreifen liegt ein weiteres Problem darin, daß das elastische Reifenmaterial im Bereich der Schulter beim Fahren wesentlich stärker als im mittleren Bereich der Lauffläche beansprucht wird, weil die ständig ihre Position wechselnde Abplattung des Reifens im Schulterbereich sowohl in Laufrichtung als auch quer dazu Verformungen hervorruft. Diese hohe Belastung der Reifenschultern führt zu Temperaturerhöhungen, die örtlich bis zu 100°C oder mehr führen können, so daß das Gummi des Reifens in diesen Bereichen zerstört wird und sich von den Schulterbereichen ausgehend vom Gürtel abzulösen beginnt.

Der die Karkasse im Bereich der Lauffläche abstützende Gürtel kann die Reifenschultern nicht ausreichend abstützen, da die Gürtelränder den aus dem Laufflächenbereich in die Flanken übergehenden Reifenschultern nicht folgen können (vgl. hierzu DE—OS 31 39 770 sowie DE—OS 27 15 724).

Bei allen vorbekannten Gürtelreifen ergibt sich somit das Problem der Beanspruchung und erhöhten Erwärmung dadurch, daß die Gürteleinlage im Bereich der durch Abplattung gebildeten Aufstandsfläche gestaucht wird. Dadurch ergeben sich nicht nur unkontrollierbare Verformungen im Aufstandsbereich des Gürtelreifens, sondern auch ein verhältnismäßig hoher Rollwiderstand des laufenden Reifens. Dies führt wiederum zu verstärkter Erwärmung und damit erhöhtem Verschleiß.

Der Erfindung liegt die Aufgabe zugrunde, einen Gürtelreifen der eingangs genannten Art zu schaffen, welcher eine Verringerung des Verformungswiderstandes der Gürteleinlage und somit eine Verbesserung des Rollwiderstandes ermöglicht, welcher laufaktiver ist und welcher sich im Betrieb nicht stark erwärmt.

Die Umfangsstörung durch die Abplattung des Reifens soll weitgehend auf die Aufstandsfläche beschränkt bleiben, so daß sich störende Rollwülste, stehende Wellen und eine Vergrößerung des Radius im nicht belasteten Umfangsteil weitgehend vermeiden lassen. Die Gürteleinlage und die sie umgebende Gummischicht soll gemäß dem idealen Funktionsprinzip des pneumatischen Systems möglichst nur so unter Zugspannung betrieben werden, daß kaum schädliche Druckspannungen in diesem System auftreten.

Diese Aufgabe wird bei einem Gürtelreifen der eingangs genannten Gattung mit den Merkmalen des kennzeichnenden Teiles des Hauptanspruches 1 gelöst. Vorteilhafte Ausgestaltungen der Erfindung und ein Verfahren zum Herstellen derartiger Gürtelreifen sind Gegenstand der Unteransprüche.

Dadurch, daß gemäß der Erfindung die einzelnen Ring-Gürtelelemente in Umfangsrichtung begrenzt dehnbar und rückformbar ausgestaltet sind, wobei im Betrieb des aufgeblasenen Reifens die Ring-Gürtelelemente derart gestreckt sind, daß sie in Umfangsrichtung praktisch vorgespannt sind, jedoch im Bereich größter Abplattung des Reifens etwa entspannt sind, wird eine Längenanpassung der Gürteleinlage in Umfangsrichtung bei einer Abplattung des Reifens dadurch ermöglicht, daß es zu einer Vor-Dehnung bzw. zu einer Vorspannung kommt. Da die Gürtelelemente vorgedehnt sind, kann während des Betriebes des Reifens keine Stauchung der Gürtelelemente erfolgen. Vielmehr wird das Maß der Dehnungen so bestimmt, daß während des Laufs des Reifens das Maß einer möglichen Längenverkürzung der Gürteleinlage dem Maß der vorangegangenen Dehnung entspricht. Auf diese Weise wird die Gürteleinlage maximal wieder auf ihren Ausgangszustand zurückgeführt, so daß es zu einer Entspannung kommt. Die die Gürteleinlage bildenden Gürtelelemente im Reifen werden demnach so unter Zugspannung gesetzt, daß sie bei der sich im Aufstandsbereich des Reifens ergebenden Abplattung nur höchstens bis in den spannungslosen Zustand zurückgestellt werden, so daß die Gürtelelemente im Betrieb im allgemeinen nicht gestaucht werden können. Die Gürteleinlage ist bei aufgeblasenem Gürtelreifen so gestreckt, daß in Umfangsrichtung keine Dehnbewegungen mehr möglich sind. Das die Gürteleinlage umgebende Gummimaterial des Reifens steht aufgrund der Streckung der Gürteleinlage ebenfalls unter Zugspannung. Im Bereich der Abplattung werden dementsprechend nicht nur die Gürtelelemente, sondern auch das die dieselben umgebende Gummimaterial mehr oder weniger stark in den ursprünglichen spannungsfreien Zustand zurückgestellt, so daß die Gürteleinlage im Bereich der Abplattung nicht den Verformungswiderstand des Gummis überwinden muß.

Durch diese Art der Verformung ergibt sich eine deutliche Verringerung des Rollwiderstandes des Gürtelreifens im Betrieb. Die Verminderung des Rollwiderstandes kann noch dadurch verstärkt werden, daß die Gürtelelemente mit ihrem seitlichen Profil so hergestellt werden, wie dies der später im Abplattungsbereich auftretenden Rückformung (spannungslos) etwa entspricht. Auch in diesem Falle bewirkt der Betriebsdruck des Gürtelreifens die gewünschte Streckung oder Dehnung der Gürteleinlage so wie des diese umgebenden Gummimaterials des Laufreifens. Der sowieso erforderliche Betriebsdruck im Reifen wird also zusätzlich genutzt, um den Rollwiderstand zu verringern.

Durch die Erfindung wird der Rollwiderstand des Reifens durch Reduzierung der Staucharbeit im Abplattungsbereich dadurch verringert, daß die verformbaren Komponenten des Reifens, d.h. die Gürtelelemente und das Gummimaterial, "Rückformungsaufgaben" erhalten, die der Größe der im Abplattungsbereich des Reifens durch den Betriebsdruck erzeugten Material-Vorspannung entsprechen. Dadurch werden unkontrollierbare Materialverformungen, die zu Verzerrungen der Lauffläche des Reifens führen, vermieden.

Der Rollwiderstand des Gürtelreifens wird weiterhin dadurch verringert, daß im Bereich zwischen jeder Schulter und jeder Flanke jeweils wenigstens eine weitere ringförmige Gürteleinlage vorgesehen ist. Diese zusätzliche Gürteleinlage kann aus einem oder auch mehreren Ringen aus Drahtmaterial, Kunststoffsträngen und dergleichen bestehen.

Durch die Anordnung einer zusätzlichen ringförmigen Gürteleinlage im Schulterbereich und somit außerhalb des durch die Abplattung der Lauftläche bedingten Verformungsbereiches braucht diese als "Schultergürtel" zu bezeichnende Gürteleinlage im wesentlichen nur Zugkräfte aufgrund der Zentrifugalwirkung aufzunehmen, weil eine Längenanpassung in Umfangsrichtung durch Materialstauchung nicht notwendig ist. Die aufzunehmenden Zugkräfte sind an jeder Stelle des Schultergürtels praktisch gleich groß. Durch seine Anordnung zwischen Schulter und Flanke unterliegt er nur geringfügiger Ausbiegungen entsprechend der jeweiligen Ausbeulung der Karkasse. In seiner höhenneutralen Lage bewirkt er weder eine Versteifung des Gürtels noch der Reifenflanke. Hingegen bewirkt der Schultergürtel eine Abstützung des Schulterbereiches und verhindert somit Überbelastungen und insbesondere Überhitzungen des Schulterbereiches, so daß die Gefahr von Ablösungen des Gürtels mit einfachen Mitteln wirksam behoben ist. Der erfindungsgemäße Reifen läuft kühler und weicher, so daß der Verschleiß verringert und der Fahrkomfort verbessert wird.

Die Schultergürtel sind beispielsweise am Material des Reifens nicht haftende, sondern gegenüber diesem Material gleitende Stützkörper aus ausreichend zugfestem und nicht dehnbarem Material ausgebildet. Sie sind in einer Höhe im Reifen im Bereich der Reifenschulter angeordnet, die sowohl bei unbelastetem als auch bei abgeplattetem Reifen etwa gleich ist. Somit unterliegen diese Schultergürtel in ihrer Position zwischen dem Gürtel und den Flanken des Reifens so gut wie keinen Verformungen durch die Abplattung des Reifens und können in Folge ihrer reibungsarmen Lagerung ihre abstützende Funktion der Reifenschulter erfüllen, ohne daß es zu ungünstigen Belastungen in dem sich nicht so stark erwärmenden Schulterbereich des Reifens kommt. Die tatsächlich auftretenden geringfügigen Verformungen gleichen die Schultergürtel über ihren gesamten Umfang problemlos aus.

Durch die besondere Ausbildung des Gürtels des erfindungsgemäßen Reifens können sich die in einer Ebene nebeneinander liegenden Gürtelteile bzw. Gürtelringe beim Überfahren von Unebenheiten und anderen Geländeformen relativ frei gegeneinander sowie dem Laufstreifenmaterial bewegen, verleihen dem Gürtelreifen aber dennoch eine hohe Quersteifigkeit, wobei nur ein vergleichsweise geringer Rollwiderstand auftritt und beim Herstellen derartiger Gürtelreifen Material gespart werden kann.

Durch die Erfindung ergibt sich eine besonders flexible Ausbildung der Gürtellage, die sich allen vorkommenden Fahrbahnverhältnissen ohne weiteres leicht anpassen kann und aufgrund ihrer in einer gemeinsamen Ebene in sehr geringer Dicke angeordneten Gürtelelemente auch einen besonders geringen Rollwiderstand aufweist, was zusammen mit der durch die Erfindung ermöglichten leichten Bauweise einerseits zu besonders guten Fahreigenschaften, andererseits aber auch zu einer beträchtlichen Material- und Kostenersparnis bei der Herstellung derartiger Gürtelreifen führt. Eine wichtige Voraussetzung hierfür ist, daß das gesamte eingesetzte Gürtelmaterial ausschließlich nur zur Aufnahme der entstehenden Ringzugkräfte eingesetzt wird. Der sonst übliche Materialaufwand für Querfäden, Querrippen usw. entfällt völlig, da deren Funktion ja ohnehin schon durch die radialen Cordfadenschlingen der Karkasse ausgeübt wird.

Aufgrund der Ausbildung der Gürtellage in einer einzigen gemeinsamen Umfangsebene mit geringstmöglicher Querschnittsdicke sind derartige Reifen insbesondere für hohe Geschwindigkeiten geeignet, da durch die Reduzierung der inneren Bewegungs-Verformungswiderstände zwangsläufig auch die Eigenwärmeentwicklung im Laufflächenbereich gesenkt wird und die Reifen insgesamt kühler laufen. Durch die flach gestreckte Anordnung der Gürtelringe wird nämlich erreicht, daß bei gleichem Durchmesser der Gürtellage die ständige Abflachung des Laufstreifens auf der Fahrbahn eine geringere Energie erfordert als bei den bekannten konvex geformten Gürtelkonstruktionen. Für die Ringe oder Bänder der Gürtellage können alle geeigneten Materialien, insbesondere hochzugfeste Stahllegierungen, aber auch Kohlenstoffaser oder dergleichen verwendet werden.

Ein besonders genau definiertes Abrollverhalten derartiger Gürtelreifen kann durch das Merkmal des Anspruches 7 erreicht werden, während durch den Anspruch 8 den unterschiedlichen Belastungen derartiger Gürtelreifen über die Breite des Laufflächenstreifens ohne besondere Schwierigkeiten Rechnung getragen werden kann.

Durch den Anspruch 9 kann Beschädigungen des die Bänder oder Ringe der Gürtellage umgebenden Gummi- bzw. Kunststoffmaterials selbst bei extremen Belastungen vorgebeugt werden. Bei Gürtelreifen, bei denen die Ringe der Gürtellage oberhalb bzw. außerhalb des als Festigkeitsträger dienenden Karkassenkörpers angeordnet sind, wird durch den Anspruch 10 in besonders vorteilhafter Weise die Anpassung an die beim Abrollen ständig wechselnden Belastungen erreicht. Dabei können die einzelnen Ringe der Gürtellage ein entsprechend Anspruch 11 gestaltetes Profil haben und gemäß Anspruch 12 jeweils quer zur Laufrichtung des Reifens symmetrisch bzw. völlig kongruent nebeneinander angeordnet sein, so daß sich keine einander entgegenwirkende Verformungen in dem engen Bereich der Gürtelringlage mit der Gefahr örtlicher Überlastung der Gummihülle ergeben können.

Um eine zu starke Erwärmung des Reifenkörpers durch die beim Abrollen des Reifens, insbesondere unter hohen Fahrgeschwindigkeiten, permanent auftretenden Stauch- und Dehnbewegungen der Gürtellagen zu vermeiden, können gemäß Anspruch 13 die oberhalb bzw. außerhalb des Karkassenkörpers angeordneten Ringe der Gürtellage vorzugsweise in einer dünnen Hülle aus z.B. einem Kautschukgemisch (Scherkautschuk) oder ähnlichem gelagert sein, das an der Ringoberfläche fest haftet und zumindest in Reifenumfangsrichtung einen hohen Elastizitätsmodul hat.

Eine punktgenaue Anordnung der Ringe der Gürtellage gegenüber dem innenliegenden Karkassenkörper wird durch den Anspruch 14 auch für Gießreifen aus Kunststoff oder aus einem anderen geeigneten gießfähigen Material erzielt.

Außerdem kann die Erfindung aber auch bei einem Gürtelreifen vorteilhaft angewendet werden, bei dem gemäß Anspruch 15 die Ringe der Gürtellage innerhalb des als Festigkeitsträger dienenden Karkassenkörpers angeordnet und vorzugsweise glatt oder unprofiliert ausgebildet sind. Bei dieser Ausführungsform der Erfindung sind die Ringe zweckmäßig formschlüssig gleitend in einem sie umhüllenden Gummi- bzw. Kunststoffmantel eingebettet, können aber auch mit einem gleitfähigen Kunststoffmaterial wie Polytetrafluorethylen oder dergleichen beschichtet sein, um die Gleiteigenschaften gegenüber dem Reifenkörper noch zu verbessern. Hierdurch kann die energiezehrende permanente Stauchbewegung des Gürtels oberhalb der Bodenaufstandsfläche umgangen werden.

Durch die im Anspruch 21 gekennzeichnete Herstellungsweise derartiger Gürtelreifen wird im übrigen eine besonders genaue Anordnung der die Gürtellage bildenden Ringe oder Bänder am Reifenkörper erreicht, wie dies bei der weiter oben beschriebenen bekannten Herstellung von Gürtellagen nicht möglich ist.

Bevorzugte Ausführungsbeispiele der Erfindung sind in der Zeichnung schematisch dargestellt. Es zeigen

Fig. 1 einen teilweise aufgeschnittenen Gürtelreifen in perspektivischer Ansicht,

Fig. 2 einen Teilschnitt durch den Reifen gemäß Schnittlinie II- II von Fig. 1,

Fig. 3 einen weiteren Teilschnitt durch den Gürtelreifen gemäß Schnittlinie III-III von Fig. 2,

Fig. 4 einen Schnitt durch einen Ring der Gürtellage derartiger Reifen gemäß Schnittlinie IV-IV von Fig. 2,

Fig. 5 einen Schnitt gemäß Schnittlinie IV-IV von Fig. 2 durch einen Ring mit einem etwas anderen Ringquerschnitt,

Fig. 6 einen Schnitt durch eine Nebeneinanderanordnung mehrerer derartiger Ringe entsprechend Schnittlinie IV-IV von Fig. 2,

Fig. 7 einen gegenüber Fig. 2 vergrößerten Teilschnitt durch die Ringanordnung von Fig. 6 bei einem Gürtelreifen von Fig. 1 bis 3,

Fig. 8 einen gewellten Ring für einen Gürtelreifen nach Fig. 1 bis 3,

Fig. 9 einen in Reifenumfangsrichtung zickzackförmig ausgebildeten Ring für einen derartigen Gürtelreifen,

Fig. 10 einen abwechselnd nach außen gewölbten und dazwischen jeweils gestreckt ausgebildeten Ring für einen derartigen Gürtelreifen,

Fig. 11 noch einen Ring mit unmittelbar aufeinanderfolgenden, nach außen gerichteten Wellungen für einen derartigen Gürtelreifen,

Fig. 12 eine gegenüber Fig. 1 bis 3 abgewandelte Ausführungsform eines derartigen Gürtelreifens, bei dem die Ringe oder Bänder der Gürtellage nicht an der Außenseite, sondern im Inneren der Karkasse angeordnet sind, und

Fig. 13 einen Teilschnitt durch diese Ausführungsform gemäß Schnittlinie XIII-XIII von Fig. 12, während

Fig. 14 eine Vorrichtung zum seitlichen Fixieren der die Gürtellage des Reifens bildenden Ringe oder Bänder in einer schematischen Teil-Seitenansicht,

Fig. 15 einen Schnitt durch diese Vorrichtung gemäß Schnittlinie XV-XV von Fig. 14,

Fig. 16 eine perspektivische Teilansicht der Vorrichtung von Fig. 14 und 15,

Fig. 17 eine schematische Darstellung eines Schulterbereiches des erfindungsgemäßen Ringgürtels, woraus die Anordnung eines Schultergürtels und dessen Verlagerung unter Belastung des Reifens zu erkennen ist,

Fig. 18 eine schematische Schnitt-darstellung des Laufflächenbereiches einer abgewandelten Ausführungsform des erfindungsgemäßen Gürtelreifens mit besonders gestalteten Profilrillen und

Fig. 19 eine schematische Darstellung eines Gürtelelementes im Aufstandsbereich.

Bei den in der Zeichnung gezeigten Ausführungsbeispielen von Fahrzeugreifen handelt es sich um Gürtelreifen 1 mit einem torusförmig gewölbten Karkassenkörper 2, der aus vorzugsweise quer zur Laufrichtung des Reifens angeordneten Verstärkungseinlagen 3 besteht, und mit einer sich in Laufrichtung erstreckenden ringförmigen Gürtellage 4. Die Verstärkungseinlagen 3 bestehen zweckmäßig aus mindestens einem Cord- oder Drahtfaden, der in ganz oder teilweise fortlaufenden Fadenschlingen mit nebeneinanderliegenden Schlingenabschnitten um Halteringe oder Wulstkerne 3a, 3b am Reifeninnenumfang herum- und am gesamten Reifenumfang in torusförmigen Umfangsebenen über die Flanken und den Zenit des Karkassenquerschnittes hin- und hergeführt ist, wie dies im einzelnen in der Patentanmeldung P 33 03 595.4 offenbart ist.

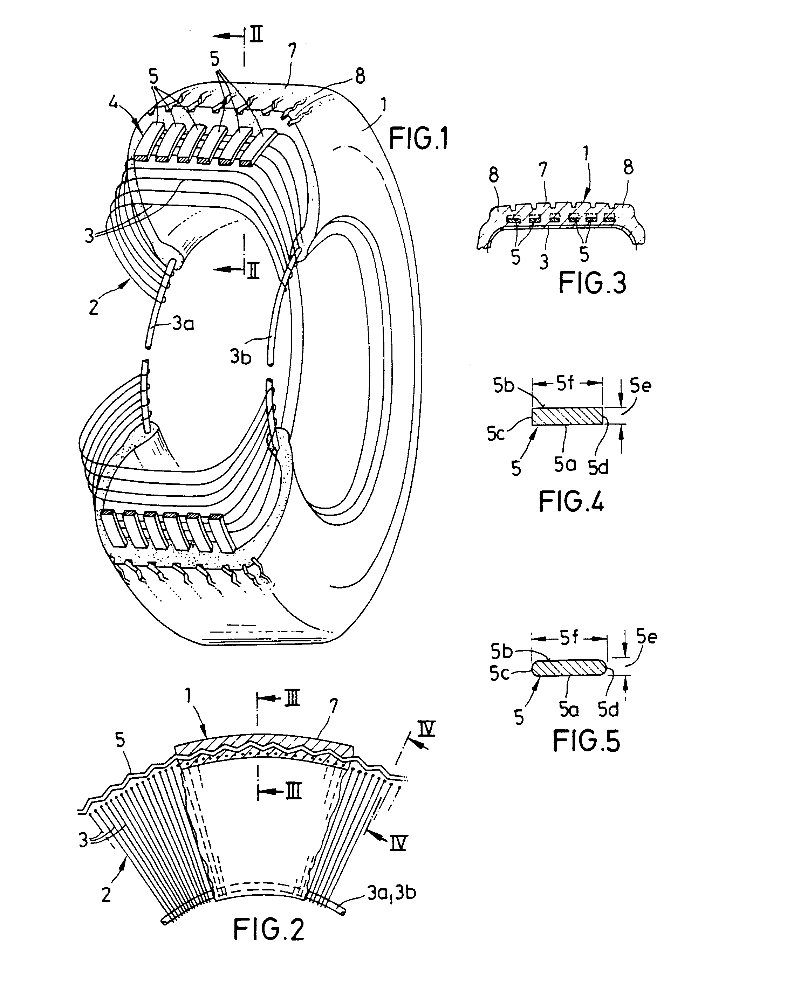

Wie in Fig. 1 bis 3 weiterhin zu erkennen ist, besteht bei derartigen Gürtelreifen die Gürtellage 4 aus mehreren, in einer einzigen, im Querschnitt im wesentlichen zylindrischen gemeinsamen Umfangsebene in gegenseitigem Abstand koaxial und parallel nebeneinander angeordneten geschlossenen Ringen oder Bändern 5 mit parallelen Innen- und Außenumfangsflächen 5a, 5b und glatten Rändern oder Kanten 5c, 5d, deren monolithische Struktur eine gleichbleibende Querschnittsform und Dimensionssteifigkeit innerhalb des Reifens sicherstellt. Das für die Bildung des Gürtels 4 benötigte Ring- oder Bandmaterial ist dabei ausschließlich koaxial und im Querschnitt vorzugsweise flach gestreckt in einer einzigen Gürtellage in geringstmöglicher Querschnittsdicke 5e über die gesamte Breite des Gürtels derart nebeneinander angeordnet, daß die Summe der Volumina aller im Reifenquerschnitt ohne jede Querverbindungen im Abstand parallel nebeneinander angeordneten Gürtelringe 5 exakt dem Gesamtvolumen des Gürtelmaterials entspricht und die konstruktiv vorgegebene Position des Gürtelmaterials durch die maßgenaue Ringform genau eingehalten wird.

Zwischen den einzelnen Ringen oder Bändern 5 bzw. zwischen den Teilquerschnittsflächen, die, wie beispielsweise in Fig. 4, 5 und 6 gezeigt ist, einen im wesentlichen flachen rechteckförmigen Querschnitt von einer Breite 5f haben, sind außerdem jeweils ausreichend breite und völlig ungestörte Haftungszonen oder Haftungsflächen bzw. Haftungsbereiche 6 zu den außenliegenden Reifenteilen, wie Laufflächenstreifen 7 und Reifenschultern 8, hin vorhanden. Diese Haftungsbereiche werden in geeigneter Weise herkömmlich mit Kautschukmaterial oder beim Gießverfahren mit Kunststoffmaterial so ausgefüllt, daß ein homogener und kraftschlüssiger Verbund zwischen den unterhalb und oberhalb der Gürtellage befindlichen elastischen Reifenteilen vorhanden ist.

Die Ringe 5 können in einer bevorzugten Ausführungsform der Erfindung aus vorgerecktem Bandmaterial wie hochzugfester Stahl, Kunststoff oder mit Kohlenstoffasern verstärktes Kunststoffmaterial bestehen. Die Gürtellage 4 kann symmetrisch bzw. derart kongruent oder deckungsgleich nebeneinander angeordnet sein, daß jeweils alle parallelen Ringe 5 ihren Wellenkopf und ihr Wellental bzw. den dazwischen liegenden Abschnitt jeweils in einer gemeinsamen Ebene quer zur Laufrichtung des Reifens 1 haben.

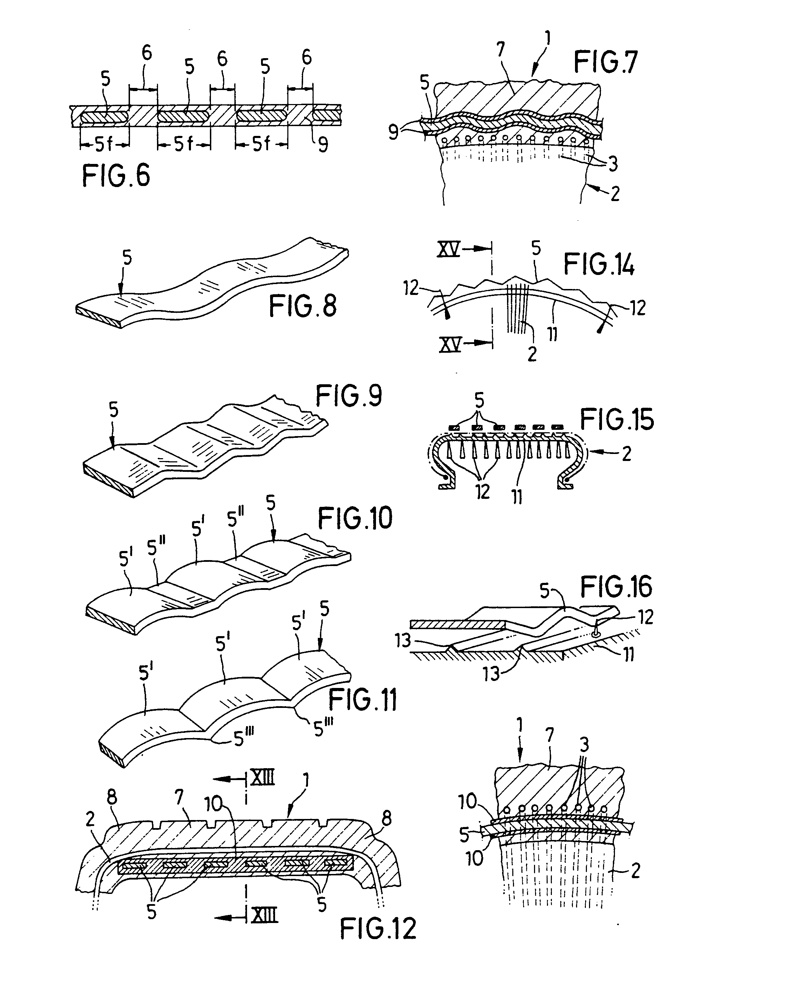

Die oberhalb bzw. außerhalb des Karkassenkörpers 2 angeordneten Ringe 5 sind dabei vorzugsweise in einer dünnen Hülle 9 aus einem an der Ringoberfläche fest haftenden, jedoch äußerst zähen Kautschukgemisch (Scherkautschuk) oder ähnlichem gelagert (Fig. 6 und 7), das zumindest in Reifenumfangsrichtung einen hohen Elastizitätsmodul hat und dadurch in der Lage ist, die ständigen Verformungen der Ringe 5 beim Abrollen des Reifens 1 auf der Fahrbahn ohne Beschädigung des Reifenmaterials aufzunehmen. Die Ringe 5 der Gürtellage 4 bzw. die sie umhüllende dünne Kautschukmischung 9 liegen aufgrund ihrer Profilierung jeweils punktartig oder linienförmig am Umfang des Karkassenkörpers 2 an und können im einzelnen so ausgestaltet sind, wie dies in Fig. 8 bis 11 gezeigt ist. Dabei ist es aber auch möglich, die umhüllende Kautschukmischung 9 an ihrem inneren und äußeren Durchmesser glatt verlaufend auszubilden, so daß sowohl innen und außen, aber auch zwischen den Ringen 5 glatte Anschlüsse für die angrenzenden Reifenteile möglich sind.

Im Unterschied zu dem Ausführungsbeispiel von Fig. 1 bis 3 können die Ringe 5 der Gürtellage 4 aber auch, wie dies bei dem abgewandelten Ausführungsbeispiel von Fig. 12 bis 14 gezeigt ist, innerhalb des als Festigkeitsträger dienenden Karkassenkörpers 2 angeordnet sein. Die Ringe 5 sind dabei vorzugsweise glatt und unprofiliert ausgebildet und können in einen sie umhüllenden Gummi- bzw. Kunststoffmantel 10 formschlüssig gleitend eingebettet sein, wobei die Gleiteigenschaften der Ringe 5 noch dadurch verbessert werden können, daß die Ringe mit einem gleitfähigen Kunststoffmaterial, wie Polytetrafluorethylen oder dergleichen, beschichtet sind.

In Fig. 14 bis 16 ist sodann noch ein Verfahren zum Herstellen der in Fig. 1 bis 13 gezeigten Gürtelreifen dargestellt. Bei diesem Herstellungsverfahren werden die die einzige Gürtellage des Reifens bildenden Ringe oder Bänder 5 in einer Vulkanisier- oder Gießform mit einem Formkern 11 gegen seitliche Verlagerung gesichert, indem die Ringe oder Bänder 5, je nachdem, ob die Herstellung aus Gummimaterial in einer Vulkanisierform oder aus einem geeigneten verschleißfesten und dauerhaften gießfähigen Kunststoffmaterial in einer Gießform erfolgt, durch dünne Führungsnadeln 12 gegen seitliche Verlagerung geschützt werden. Die Führungsnadeln 12 sind aus dem Kern 11 der Vulkanisier- oder Gießform im wesentlichen radial nach außen ausfahrbar und halten jeden Ring oder jedes Band 5 der Gürtellage durch seitliche Anlage an mehreren Umfangsstellen gegen ein seitliches Verrutschen in der Form jeweils beidseitig fest.

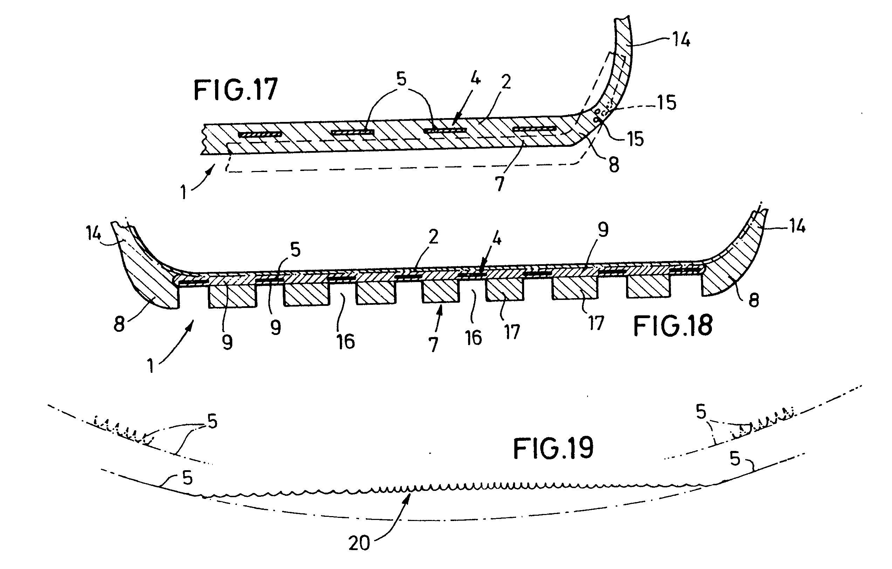

In Fig. 14 und 15 ist die Anordnung und Verwendung derartiger dünner Führungsnadeln 12 in Verbindung mit der Reifeninnenform zur sicheren seitlichen Fixierung während des Herstellungsprozesses dargestellt. Die Führungsnadeln 12 werden durch die seitliche Eigensteifigkeit der Gürtelringe 5 nur in größeren Abständen am Ringumfang benötigt und können während der Demontage bzw. vor dem Herausnehmen des fertigen Reifens aus der Vulkanisier- oder Gießform so in den Kern 11 der festen Innenform zurückgezogen werden, daß ein unbehindertes Arbeiten an der Form möglich ist.

Im übrigen ist es zweckmäßig, für das Gießen derartiger Gürtelreifen aus einer geeigneten gießfähigen Kunststoffmasse den Formkern 11 mit rippenartigen Profilen 13 zu versehen, an denen die gewellten oder zickzackförmig oder in anderer Weise geformten Bänder oder Ringe 5 jeweils punktartig zur Auflage kommen, wie dies in Fig. 16 gezeigt ist.

In Fig. 17 ist gezeigt, daß im Übergangsbereich zwischen Reifenschulter 8 und Reifenflanke 14 jeweils wenigstens ein als Schultergürtel zu bezeichnender Ring 15 in das Reifenmaterial eingebettet ist, der aus hoch zugfestem Material wie beispielsweise Draht besteht und sich relativ zum Reifenmaterial verschieben kann. Fig. 17 zeigt die Ringe 15 in zwei verschiedenen Positionen, nämlich in vollen Linien in der Position bei unbelastetem Reifen und in gestrichelten Linien in der Position bei unter normaler Reifenabplattung seitlich ausgebeulter Reifenflanke 14. Es ist erkennbar, daß die Ringe 15 ihre Höhenlage gegenüber der in der Zeichnung nicht dargestellten Drehachse des Reifens praktisch nicht verändern, wenn der Reifen im Bereich seiner Auflage auf der Fahrbahn abgeplattet wird und die Flanken 14 dementsprechend sich ausbeulen. Die zur Abstützung der Schulter 8 als Schultergürtel wirkenden Ringe 15 befinden sich somit in einer mehr oder weniger neutralen Position und behindern daher trotz ihrer Stützfunktion die Bewegbarkeit des Gürtelreifens nicht.

Aus Fig. 18 ist erkennbar, daß zur Steigerung der Flexibilität des Gürtels 4 in der Lauffläche 7 besonders ausgeprägte Profilrillen 16 vorgesehen sind, die sich in Laufrichtung bzw. Umfangsrichtung des Gürtelreifens 1 erstrecken und bis auf die verhältnismäßig weich-elastische Hülle 9 reichen, in welche die Gürtelringe 5 eingebettet sind. Die Profilrillen 16 sind dabei so angeordnet, daß sie sich im Bereich der einzelnen Gürtelringe 5 befinden, während im Bereich zwischen benachbarten Gürtelringen 5 Laufstreifen 17 die Lauffläche bilden. Die Profilrillen 16 können durch in der Zeichnung nicht dargestellte Querrillen untereinander verbunden sein. Bei dieser Ausführungsform verteilt sich das Material der Lauffläche bzw. des Laufstreifens 7 mit den üblichen Querrillen auf die Räume zwischen den Gürtelringen 5. Die in einer besonders elastischen Gummischicht 9 eingebetteten Gürtelringe 5 werden somit in ihrer Bewegbarkeit nicht von dem verhältnismäßig dicken und zähen Laufstreifenmaterial behindert und behalten ihr extrem niedriges Trägheitsmoment.

Die Dicke der Laufstreifen 17 bzw. die Tiefe der Profilrillen 16 beträgt beispielsweise 8 mm bei einer Dicke von 3 bis 5 mm der Gürtellage 4 und Karkasse 2. Somit kommen Defekte verursachende Gegenstände wie Nägel und ähnliches kaum mit der weich-elastischen Hülle 9 in Kontakt. Dementsprechend sind Beschädigungen dieser Hülle 9 im normalen Betrieb nicht zu befürchten.

Aus Fig. 19 ist erkennbar, daß das als Gürteleinlage dienende Band 5 als in Längsrichtung dehnbarer Körper ausgebildet ist, der beim Aufblasen des Reifens aus der in strichpunktierten Linien angedeuteten spannungslosen Position in die in vollen Linien dargestellte vorgespannte position aufgeweitet wird. Die Aufweitung führt dazu, daß das Band 5 auf einem Kreis mit erhöhtem Durchmesser liegt. Sie ist so ausgewählt, daß das als Gürtel dienende Band 5 in der Mitte der Aufstandsfläche 20 durch die Abplattung des Gürtelreifens bis auf die Kreislinie rückgeformt wird, welche das Band im spannungslosen Zustand einnehmen würde. Dadurch wird im Abplattungsbereich das Band 5 nur bis in den spannungslosen Zustand entspannt, nicht aber gestaucht.

Obwohl die Erfindung vorstehend anhand von Reifen mit einer aus ringförmigen Bändern oder Streifen aus mehr oder weniger festem Material wie Metall oder Kunststoff bestehenden Gürteleinlage beschrieben worden ist, kann man auch Reifen mit einem Cord-Gürtel in gleicher Weise "vorspannen" bzw. vorverformen, damit die Gürteleinlage beim Abplatten des Reifens im Aufstandsbereich sich normalerweise nur bis in ihren spannungslosen Zustand rückverformt und das Gummimaterial sich bis in seinen entspannten Zustand zusammenzieht, so daß den Rollwiderstand des Reifens erhöhende Stauchungen der Gürteleinlage und des Gummimaterials nicht auftreten.

## Patentansprüche

1. Gürtelreifen (1), mit einem eine radiale Lauffläche (7) und zu beiden Seiten derselben angeordnete Flanken (14) aufweisenden torusförmig gewölbten Karkassenkörper (2), der eine sich vorzugsweise quer zur Laufrichtung des Reifens (1) erstreckende Verstärkungseinlage und eine sich zwischen zwei jeweils am Übergang von der Lauffläche (7) zu den Flanken (14) befindlichen Schulter (8) in Laufrichtung des Reifens (1) erstreckende ringförmige Gürteleinlage (4) aufweist, wobei die Gürteleinlage (4) aus einem oder mehreren nebeneinander angeordneten ringförmigen Gürtelelementen (5) besteht, dadurch gekennzeichnet, daß die einzelnen Ring-Gürtelelemente (5) in Umfangsrichtung begrenzt dehnbar und rückformbar ausgebildet sind, wobei im Betrieb des aufgeblasenen Reifens (1) die Ring-Gürtelelemente (5) derart gestreckt sind, daß sie in Umfangsrichtung praktisch vorgespannt sind, jedoch im Bereich größter Abplattung des Reifens (1) etwa entspannt sind.

2. Gürtelreifen nach Anspruch 1, dadurch gekennzeichnet, daß er etwa im Bereich zwischen jeder Schulter (8) und jeder Flanke (14) jeweils wenigstens eine weitere ringförmige Gürteleinlage (15) enthält.

3. Gürtelreifen nach Anspruch 2, dadurch gekennzeichnet, daß die weitere Gürteleinlage (15) in einer etwa höhenneutralen Position im Reifen (1) angeordnet ist.

4. Gürtelreifen nach Anspruch 2 oder 3, dadurch gekennzeichnet, daß die weitere Gürteleinlage (15) gegenüber dem Reifenmaterial verschiebbar in den Reifen (1) eingebettet ist.

5. Gürtelreifen nach einem der Ansprüche 2 bis 4, dadurch gekennzeichnet, daß die weitere Gürteleinlage (15) auf der Außenseite der Karkasse (2) im Reifen (1) angeordnet ist.

6. Gürtelreifen nach einem der Ansprüche 2 bis 5, dadurch gekennzeichnet, daß jede weitere Gürteleinlage (15) wenigstens ein Ring aus Drahtmaterial mit mehr oder weniger kreisförmigem Querschnitt ist.

7. Gürtelreifen nach einem der Ansprüche 1 bis 6, dadurch gekennzeichnet, daß die Gürteleinlage (4) aus mehreren, in einer einzigen, im Querschnitt im wesentlichen zylindrischen Umfangsebene in gegenseitigem Abstand koaxial und parallel nebeneinander angeordneten Ringen aus Draht, Cord oder Bändern (5) mit parallelen Innen- und Außenumfangsflächen (5a, 5b) und glatten Rändern (5c, 5d) besteht, deren monolithische Struktur eine gleichbleibende Querschnittsform und Dimensionssteifigkeit sicherstellt, wobei das für die Bildung des Gürtels benötigte Draht- oder Bandmaterial ausschließlich koaxial und im Querschnitt vorzugsweise flach gestreckt in geringstmöglicher Querschnittsdicke (5e) derart angeordnet ist, daß die Summe der Volumina aller im Reifenquerschnitt ohne jede Querverbindungen im Abstand parallel nebeneinander angeordneter Gürtelringe (5) exakt dem Gesamtvolumen des Gürtelmaterials entspricht und die konstruktiv vorgegebene Position des Gürtelmaterials durch die maßgenaue Ringform genau eingehalten wird, und daß zwischen den einzelnen Ringen oder Bändern (5) bzw. Teilquerschnittsflächen jeweils ausreichend breite und völlig ungestörte Haftungszonen, Haftungsflächen oder Haftungsbereiche (6) zu den außenliegenden Reifenteilen, wie Laufflächenstreifen (7) und Reifenschultern (8), hin vorhanden sind.

8. Gürtelreifen nach Anspruch 7, dadurch gekennzeichnet, daß die Ringe (5) aus vorgerecktem Bandmaterial bestehen.

9. Gürtelreifen nach Anspruch 7 oder 8, dadurch gekennzeichnet, daß die Gürteleinlage (4) je nach örtlicher Belastung aus verschieden breit (5f) und/oder verschieden dick (5e) dimensionierten Ringen (5) besteht.

10. Gürtelreifen nach einem der Ansprüch 1 bis 9, dadurch gekennzeichnet, daß die Ränder (5c, 5d) oder Kanten der Ringe (5) gebrochen oder abgerundet sind.

11. Gürtelreifen nach einem der Ansprüche 1 bis 10, dadurch gekennzeichnet, daß die Ringe (5) in Umfangsoder Laufrichtung des Reifens (1) so profiliert sind, daß sie nach dem Dehnen beim Abplatten des Reifens (1) eine mehr oder weniger exakt definierte Rückformung ausführen können.

12. Gürtelreifen nach Anspruch 11, dadurch gekennzeichnet, daß die Ringe (5) der Gürteleinlage (4) ein in Lauf- bzw. Umfangsrichtung des Reifens (1) gewelltes, zickzackförmiges oder in anderer Weise elastisch dehnbar gestaltetes Profil haben.

13. Gürtelreifen nach einem der Ansprüche 1 bis 12 dadurch gekennzeichnet, daß die Ringe (5) der Gürteleinlage (4) im Profil bzw. quer zur Laufrichtung des Reifens (1) symmetrisch bzw. kongruent nebeneinander angeordnet sind.

14. Gürtelreifen nach einem der Ansprüche 1 bis 13, dadurch gekennzeichnet, daß die Ringe (5) vollständig in einer weich-elastischen Hülle (9) aus z. B. einem Kautschukgemisch (Scherkautschuk) oder ähnlichem gelagert sind, das an der Oberfläche der Ringe fest haftet und zumindes in Reifenumfangsrichtung einen hohen Elastizitätsmodul aufweist.

15. Gürtelreifen nach einem der Ansprüche 1 bis 14, dadurch gekennzeichnet, daß die Ringe (5) der Gürteleinlage (4) bzw. die sie umhüllende Kautschukmischung (9) aufgrund ihrer Profilierung jeweils punktartig oder linienförmig am Umfang des Karkassenkörpers (2) anliegen, wobei es aber auch möglich ist, die umhüllende Kautschukmischung (9) an ihrem inneren und äußeren Durchmesser glatt verlaufend auszubilden, so daß sowohl innen und außen, aber auch zwischen den Ringen (5) glatte Abschlüsse für die angrenzenden Reifenteile möglich sind.

16. Gürtelreifen nach einem der Ansprüche 1 bis 15, dadurch gekennzeichnet, daß die Ringe (5) der Gürteleinlage (4) innerhalb des als Festigkeitsträger dienenden Karkassenkörpers (2) angeordnet und gegenüber dem Reifenmaterial bewegbar sind.

17. Gürtelreifen nach Anspruch 16, dadurch gekennzeichnet, daß die Ringe (5) gleitend in einem sie umhüllenden Gummi- oder Kunststoffmantel (10) eingebettet sind.

18. Gürtelreifen nach Anspruch 16 oder 17, dadurch gekennzeichnet, daß die Ringe (5) mit einem gleitfähigen Kunststoffmaterial wie Polytetrafluorethylen beschichtet sind.

19. Gürtelreifen nach einem der Ansprüche 1 bis 18, dadurch gekennzeichnet, daß die in seiner Lauffläche vorgesehenen Profilrillen (16) bis auf die die Gürtelringe (5) enthaltende weich-elastische Schicht (9) reichen.

20. Gürtelreifen nach Anspruch 19, dadurch gekennzeichnet, daß jede Gürteleinlage (5) jeweils unter einer Profilrille (16) angeordnet ist.

21. Gürtelreifen nach Anspruch 20, dadurch gekennzeichnet, daß die Breite der Profilrillen (16) mit der Breite der Gürteleinlagen (5) in etwa übereinstimmt.

22. Verfahren zum Herstellen von Gürtelreifen nach einem der Ansprüche 1 bis 21 in einer Vulkanisier- oder Gießform, dadurch gekennzeichnet, daß die die Gürteleinlage bildenden ringförmigen Drähte oder Bänder (5) beim Herstellen des Gürtelreifens (1) in der Vulkanisier- oder Gießform durch dünne Führungsnadeln (12) gegen seitliche Verlagerng gesichert werden, wobei die Führungsnadeln (12) aus dem Kern (11) der Form im wesentlichen radial nach außen ausfahrbar sind und jeden Ring (5) der Gürtellage durch randseitige Anlage an mehreren Umfangsstellen gegen seitliche Verlagerung jeweils beidseitig festhalten.

23. Verfahren nach Anspruch 22, dadurch gekennzeichnet, daß die die Gürteleinlage bildenden Drähte oder Bänder (5) nach dem Einbauen in den Reifen (1) unter Einwirkung des Luftdruckes in Umfangsrichtung gedehnt werden.

**Revendications**

1. Pneumatique ceinturé (1), avec un corps de carcasse (2) bombé en forme de tore présentant une bande de roulement radiale (7) et des flancs (14) disposés des deux côtés de cette bande, qui présente une nappe de renforcement s'étendant de préférence perpendiculairement au sens de roulement du pneumatique (1) et une ceinture annulaire (4) s'étendant dans le sens de roulement du pneumatique (1) entre deux épaulements (8) qui se trouvent à la transition entre la bande de roulement (7) et les flancs (14), la ceinture (4) étant constituée d'un ou plusieurs éléments de ceinture annulaires (5) juxtaposés, caractérisé en ce que les différents éléments annulaires de ceinture (5) sont réalisés avec une possibilité limitée d'allongement et de déformation en retour dans le sens circonférentiel, les éléments annulaires de ceinture (5) étant, pendant l'utilisation du pneumatique gonflé (1), étirés de telle sorte qu'ils sont pratiquement précontraints dans le sens circonférentiel, mais sont approximativement détendus dans la région de plus grand méplat du pneumatique (1).

2. Pneumatique ceinturé selon la revendication 1, caractérisé en ce qu'il contient, approximativement dans la région entre chaque épaulement (8) et chaque flanc (14), au moins une nappe d'armature annulaire respective supplémentaire (15).

3. Pneumatique ceinturé selon la revendication 2, caractérisé en ce que la nappe d'armature supplémentaire (15) est disposée dans le pneumatique (1) à une position de hauteur approximativement neutre.

4. Pneumatique ceinturé selon la revendication 2 ou 3, caractérisé en ce que la nappe d'armature supplémentaire (15) est logée dans le pneumatique (1) avec possibilité de translation par rapport au matériau du pneumatique.

5. Pneumatique ceinturé selon l'une des revendications 2 à 4, caractérisé en ce que la nappe d'armature supplémentaire (15) est disposée dans le pneumatique (1) sur le côté extérieur de la carcasse (2).

6. Pneumatique ceinturé selon l'une des revendications 2 à 5, caractérisé en ce que chaque nappe d'armature supplémentaire (15) est au moins un anneau en fil métallique de section plus ou moins circulaire.

7. Pneumatique ceinturé selon l'une des revendications 1 à 6, caractérisé en ce que la ceinture (4) est constituée de plusieurs anneaux en fil métallique ou en corde ou de bandes (5), à faces périphériques intérieures et extérieures parallèles (5a, 5b) et à bords lisses (5c, 5d), qui sont juxtaposés en écartement mutuel de manière coaxiale et parallèle dans un unique plan circonférentiel de section sensiblement cylindrique, et dont la structure monolithique assure une forme de section constante et une rigidité dimensionnelle, le matériau en fil ou en bande nécessaire pour la formation de la ceinture étant disposé, en étant étiré exclusivement coaxialement et de préférence en section plate avec une épaisseur de section (5e) la plus petite possible, de telle sorte que la somme des volumes de tous les anneaux de ceinture (5), juxtaposés à distance mutuelle et en parallèle sans aucune liaison transversale dans la section du pneumatique, correspond exactement au volume total du matériau de la ceinture, et la position constructivement allouée du matériau de la ceinture est respectée avec précision par la forme annulaire exactement dimensionnée, et que sont présentes, entre les différents anneaux ou bandes (5) ou aires partielles de section, des zones, des surfaces ou des régions respectives d'adhérence (6), de largeurs suffisantes et absolument non perturbées, avec les parties extérieures du pneumatique, telles que la bande de roulement (7) et les épaulements (8).

8. Pneumatique ceinturé selon la revendication 7, caractérisé en ce que les anneaux (5) sont réalisés en matériau en bande pré-étiré.

9. Pneumatique ceinturé selon la revendication 7 ou 8, caractérisé en ce que la ceinture (4) est constituée, selon les sollicitations locales, d'anneaux (5) de différentes largeurs (5f) et/ou épaisseurs (5e).

10. Pneumatique ceinturé selon l'une des revendications 1 à 9, caractérisé en ce que les bords (5c, 5d) ou arêtes des anneaux (5) sont brisés ou arrondis.

11. Pneumatique ceinturé selon l'une des revendications 1 à 10, caractérisé en ce que les anneaux (5) sont, dans le sens circonférentiel ou de roulement du pneumatique (1), profilés de telle sorte qu'ils peuvent réaliser une déformation en retour plus ou moins précisément définie après leur allongement lors de l'aplatissement du pneumatique (1).

12. Pneumatique ceinturé selon la revendication 11, caractérisé en ce que les anneaux (5) de la ceinture (4) possèdent, dans le sens de roulement ou circonférentiel du pneumatique (1), un profil ondulé, en zigzag ou configuré élastiquement allongeable d'une autre manière.

13. Pneumatique ceinturé selon l'une des revendications 1 à 12, caractérisé en ce que les anneaux (5) de la ceinture (4) sont juxtaposés de manière symétrique ou coïncidente en profil ou perpendiculairement au sens de roulement du pneumatique (1).

14. Pneumatique ceinturé selon l'une des revendications 1 à 13, caractérisé en ce que les anneaux (5) sont montés entièrement dans une enveloppe souple (9), constituée par exemple d'un mélange de caoutchouc (caoutchouc de cisaillement) ou similaire, qui adhère fixement sur la surface des anneaux et qui présente un module d'élasticité élevé au moins dans le sens circonférentiel du pneumatique.

15. Pneumatique ceinturé selon l'une des revendications 1 à 14, caractérisé en ce que, du fait de leur profilage, les anneaux (5) de la ceinture (4), ou encore le mélange de caoutchouc (9) qui les enveloppe, s'appliquent ponctuellement ou linéairement sur la circonférence du corps de carcasse (2), mais il est également possible de réaliser un mélange de caoutchouc enveloppant (9) ayant une allure lisse sur son diamètre intérieur et sur son diamètre extérieur, de sorte que des liaisons lisses avec les parties limitrophes du pneumatique peuvent être obtenues tant intérieurement et extérieurement qu'entre les anneaux (5).

16. Pneumatique ceinturé selon l'une des revendications 1 à 15, caractérisé en ce que les anneaux (5) de la ceinture (4) sont disposés à l'intérieur du corps de carcasse (2) servant de support de résistance et sont mobiles par rapport au matériau du pneumatique.

17. Pneumatique ceinturé selon la revendication 16, caractérisé en ce que les anneaux (5) sont logés en glissement dans une gaine en caoutchouc ou en matière plastique (10) qui les enveloppe.

18. Pneumatique ceinturé selon la revendication 16 ou 17, caractérisé en ce que les anneaux (5) sont enduits d'une couche de matière plastique glissante telle que du polytétrafluoréthylène.

19. Pneumatique ceinturé selon l'une des revendications 1 à 18, caractérisé en ce que les rainures (16) prévues dans sa bande de roulement ne s'étendent pas sur la couche souple (9) contenant les anneaux de ceinture (5).

20. Pneumatique ceinturé selon la revendication 19, caractérisé en ce que chaque élément de ceinture (5) est disposé en dessous d'une rainure (16).

21. Pneumatique ceinturé selon la revendication 20, caractérisé en ce que la largeur des rainures (16) correspond approximativement à celle des éléments de ceinture (5).

22. Procédé de fabrication de pneumatiques ceinturés selon l'une des revendications 1 à 21 dans un moule de vulcanisation ou de fusion, caractérisé en ce que les fils métalliques ou bandes annulaires (5) qui constituent les éléments de ceinture sont, lors de la fabrication du pneumatique ceinturé (1) dans un moule de vulcanisation ou de fusion, empêchés de se déplacer latéralement par de minces aiguilles de guidage (12) qui peuvent être déployées sensiblement radialement vers l'extérieur à partir du noyau (11) du moule, chaque anneau (5) de la ceinture étant maintenu fixement des deux côtés, en étant empêché de se déplacer latéralement, par une application marginale en plusieurs points circonférentiels.

23. Procédé selon la revendication 22, caractérisé en ce que les fils métalliques ou bandes (5) qui constituent les éléments de ceinture sont, à la suite du montage dans le pneumatique (1), allongés dans le sens circonférentiel sous l'action de la pression d'air.

**Claims**

1. A radial tyre (1) comprising a toroidal curved carcass body (2) having a radial running tread (7) and flanks (14) arranged on the two sides thereof, said carcass body comprising a reinforcing inlay extending preferably laterally to the running direction of the tyre (1) and an annular belt inlay (4) extending between two shoulders (8) arranged respectively at the transition from said running tread (7) to said flanks (14) and in running direction of the tyre (1), said belt inlay (4) consisting of one or several annular belt elements (5) arranged side by side, characterized in

that each of the annular belt elements (5) is provided to be restrictively extensible and reformable in circumferential direction, said annular belt elements (5) being stretched in such a manner during operation that they are practically prestressed in circumferential direction, however, are approximately released in the region of largest flattening of the tyre (1).

2. The radial tyre as claimed in claim 1, characterized in that it comprises respectively another annular belt inlay (15) approximately in the region between each shoulder (8) and each flank (14).

3. The radial tyre as claimed in claim 2, characterized in that the other belt inlay (15) is arranged in an approximately contour-neutral position in the tyre (1).

4. The radial tyre as claimed in claim 2 or 3, characterized in that the other belt inlay (15) is displacably embedded into the tyre (1) with respect to the tyre material.

5. The radial tyre as claimed in one of claims 2 to 4, characterized in that the other belt inlay (15) is arranged in the tyre (1) at the outer surface of said carcass (2).

6. The radial tyre as claimed in one of claims 2 to 5, characterized in that each other belt inlay (15) is at least one ring made of wire material and being more or less annular in cross section.

7. The radial tyre as claimed in one of claims 1 to 6, characterized in that said belt inlay (4) consists of several rings made of wire, cord or bands (5) having parallel inner and outer circumferential surfaces (5a, 5b) and smooth edges (5c, 5d), said rings being arranged in mutual distance side by side coaxially and in parallel in a single circumferential plane being substantially cylindrical in cross section, the monolithic structure thereof guaranteeing a constant cross section shape and dimensional stiffness, the wire or band material necessary for forming the belt being arranged exclusively coaxially and in cross section preferably flat-stretched in least possible cross section thickness (5e) in such a manner that the sum of volumina of all belt rings (5) arranged in the tyre cross section side by side in parallel and in distance without any lateral connections corresponds exactly to the total volume of the belt material and the position of the belt material predefined by construction is exactly met by the dimensionally accurate ring shape, and that respectively sufficiently wide and completely undisturbed adhesive zones, adhesive areas or adhesive regions (6) directed to the outer parts of the tyre as running tread strips (7) and tyre shoulders (8), are provided between the single rings or bands (5) and partial cross section areas, respectively.

8. The radial tyre as claimed in claim 7, characterized in that said rings (5) consist of prestretched band material.

9. The radial tyre as claimed in claim 7 or 8, characterized in that said belt inlay (4) consists of rings (5) differing in width (5f) and/or differing in thickness (5e), the dimensions thereof choosen with respect to local loads.

10. The radial tyre as claimed in one of claims 1 to 9, characterized in that the borders (5c, 5d) or edges of said rings (5) are folded or rounded.

11. The radial tyre as claimed in one of claims 1 to 10, characterized in that said rings (5) are profiled in circumferential or in running direction in such a manner that, after extension, they can perform a more or less precisely defined reforming during flattening of the tyre (1).

12. The radial tyre as claimed in claim 11, characterized in that the rings (5) of said belt inlay (4) have a profile being corrugated, zigzag-like or in another way designed to be elastically extensible in running or circumferential direction, respectively.

13. The radial tyre as claimed in one of claims 1 to 12, characterized in that the rings (5) of said belt inlay (4) are arranged side by side symmetrically or congruently, respectively, in profile or transversely to the running direction, respectively.

14. The radial tyre as claimed in one of claims 1 to 13, characterized in that the rings (5) are completely deposited in a soft-elastic cover (9) made of e.g. a caoutchouc composition (shear caoutchouc) or the like, fixedly adhering to the surfaces of the rings and having a high elastic modulus at least in circumferential direction of the tyre.

15. The radial tyre as claimed in one of claims 1 to 14, characterized in that the rings (5) of said belt inlay (4) or the caoutchouc mixture (9) surrounding them, respectively, abut in point or line contact to the circumference of said carcass body (2), however, it is also possible to design said surrounding caoutchouc mixture (9) smoothly at its inner and outer diameter such that inside as well as outside, but also between the rings (5) smooth borderings for adjacent parts of the tyre are possible.

16. The radial tyre as claimed in one of claims 1 to 15, characterized in that the rings (5) of said belt inlay (4) are arranged within said carcass body (2) acting as rigidity support and are movable relative to the tyre material.

17. The radial tyre as claimed in claim 16, characterized in that the rings (5) are slidingly embedded in a rubber or plastic envelope (10) surrounding them.

18. The radial tyre as claimed in claim 16 or 17, characterized in that the rings (5) are coated with a slidable plastic material such as polytetrafluor ethylene.

19. The radial tyre as claimed in one of claims 1 to 18, characterized in that the tread grooves (16) provided in its running tread extend onto said soft-elastic layer (9) containing said belt rings (5).

20. The radial tyre as claimed in claim 19, characterized in that each belt inlay (4) is respectively arranged beneath a tread groove (16).

21. The radial tyre as claimed in claim 20, characterized in that the width of said tread grooves (16) approximately coincides with the width of the belt inlays (4).

22. A method for manufacturing radial tyres according to one of claims 1 to 21 in a vulcanizing or casting mould, characterized in that the annular wires or bands (5) forming the belt inlay are secured against lateral displacement, during manufacturing the radial tyre (1) in said vulcanizing or casting mould, by thin guiding needles (12), said guiding needles (12) being substantially radially extendable outwards from the core (11) of said mould and fixing each ring (5) of the belt ply against lateral displacement by border abutment at several circumference points on both sides, respectively.

23. The method as claimed in claim 22, characterized in that the wires or bands (5) forming said belt inlay are extended in circumferential direction by means of tyre pressure after incorporation into the tyre (1).

FIG.1

FIG.2

FIG.3

FIG.4

FIG.5

FIG.6

FIG.7

FIG.8

FIG.9

FIG.10

FIG.11

FIG.12

FIG.14

FIG.15

FIG.16

FIG.17

FIG.18

FIG.19

14
15
15
8
2
4
5
7
1

14
8
9
17
17
16
4
7
2
16
5
9
9
8
14
1

5
5
5
20
5
5

3